# EUROPÄISCHE PATENTSCHRIFT

(11) **EP 0 816 051 B1**
(45) Veröffentlichungstag und Bekanntmachung des Hinweises auf die Patenterteilung: **20.02.2002**
(21) Anmeldenummer: 97110424.5
(22) Anmeldetag: 25.06.1997
(51) Int. Cl.: B29C 63/00, B29C 51/16

(54) **Kaschierverfahren und Vorrichtung zum Ausführen des Verfahrens**
Laminating method and apparatus for performing same
Procédé de laminage et dispositif pour sa mise en oeuvre

(30) Priorität: 26.06.1996 DE 19625631; 07.11.1996 DE 19646007
(43) Veröffentlichungstag der Anmeldung: 07.01.1998
(73) Patentinhaber: PAUL KIEFEL GMBH, D-83395 Freilassing (DE)
(72) Erfinder: Kraller, Christian, 83404 Ainring (DE); Lochner, Hans, 83471 Berchtesgaden (DE)
(74) Vertreter: Patentanwälte Leinweber & Zimmermann

(56) Entgegenhaltungen:
- EP-A- 0 629 487
- WO-A-90/03256
- US-A- 3 318 744

## Beschreibung

Die Erfindung betrifft ein Verfahren zum Kaschieren eines Trägers sowie eine Vorrichtung zum Ausführen des Verfahrens. Anwendungsgebiete liegen insbesondere im Bereich der Innenausstattung von Kraftfahrzeugen und der Möbelgestaltung.

Bei bekannten Kaschiertechniken finden Träger aus thermoplastischen Kunststoffen sowie aus duroplastischen und thermoplastischen Faserverbundteilen Anwendung. Als Kaschiermaterialien werden hauptsächlich TPO, ASA, ABS, PVC, Textilien und Leder sowie Schaumverbunde zur Verbesserung der Haptik eingesetzt. Dabei werden herkömmlicherweise Klebstoffe für die Verbindung zwischen dem Träger und der Kaschierung verwendet. Diese Klebstoffe werden auf den Träger und/oder die Kaschierung apliziert, ggf. getrocknet und während des Kaschiervorgangs aktiviert. Die am häufigsten eingesetzten Klebstoffe sind 2-Komponenten-Polyurethan-Klebstoffsysteme auf Lösungsmittel- oder Dispersionsbasis. Allein die Lagerung, Mischung, Aplizierung und Aktivierung dieser Klebstoffe birgt ein erhebliches Fehlerquellenpotential, wobei jeder einzelne Fehler zu einem Versagen der Klebung führen kann. Es kommt hinzu, daß extreme klimatische Bedingungen zu hydrolytischem Abbau von Dispersionen führen können, was ebenfalls zu einem Versagen der Klebung führen kann. Darüber hinaus schränkt die Verwendung von Klebstoffen die Recyclingfähigkeit der verwendeten Materialien erheblich ein, weil jede einzelne zusätzlich verwendete Komponente das Recyceln erschwert. Auch sind in den Klebstoffen üblicherweise vorhandene Lösungsmittel umwelttechnisch problematisch, weil sie teilweise bedenklich im Hinblick auf die Vorschriften des Gesetzes über die Vermeidung und Entsorgung von Abfällen und des Bundesimissionsschutzgesetzes sind.

Bei anderen bekannten Kaschiertechniken wird das gesamte Trägerhalbzeug mit einer zu kaschierenden Deckschicht gemeinsam oder separat erhitzt, um in dem Träger enthaltenen thermoplastischen Werkstoff zu plastifizieren. Dabei entsteht zum einem die Gefahr, daß die Erhitzung zu einer Schädigung der Struktur des Trägers führt. Beispielsweise können in dem Träger enthaltene Fasern verbrennen. Zum anderen hat die Erfahrung gezeigt, daß die Kaschierung an parallel zur Kaschierrichtung liegenden Flächen ungenügend ist. Beispielsweise treten nämlich mitunter Fasern an diesen Flächen aus. Zum anderen wird eine etwaig zwischen dem Träger und der zu kaschierenden Deckschicht liegende Schaumschicht bei dem bekannten Verfahren zerstört, da extrem hohe Drücke bzw. extrem hohe Scherkräfte auf den Schaum einwirken.

Aus der DE-C-37 22 873 ist ein Kaschierverfahren bekannt, bei dem ein einen thermoplastischen Werkstoff enthaltender Träger auf die Plastifizierungstemperatur des thermoplastischen Werkstoffs gebracht wird und in diesem Zustand mit einer Zwischenschicht in Kontakt gebracht wird, wobei die Zwischenschicht an ihrer Oberfläche plastifiziert und somit mit der Oberfläche des Trägers verklebt. Bei der Zwischenschicht handelt es sich um einen Kunststoffschaum. Wiederum erfolgt das Aufbringen des Kunststoffschaums auf den Träger unter Druck, so daß die Gefahr der Zerstörung des Schaums besteht. Ferner besteht auch die Gefahr, daß der Träger durch übermäßige Erhitzung in seiner Struktur geschädigt wird.

Aus der WO 96/09927 ist ein Kaschierverfahren bekannt, bei dem der unter Einsatz von Wärme hergestellte und nach der Herstellung wieder abgekühlte Träger an seiner Oberfläche erneut erwärmt wird, um im Bereich der Oberfläche thermoplastischen Werkstoff zu plastifizieren, woraufhin eine vorgeheizte Deckschicht auf die erwärmte Oberfläche aufgebracht wird.

Die Erfindung geht entsprechend den Oberbegriffen der Ansprüche 1, 2 und 8 von der Lehre der EP 0 629 487 A1 aus, die gemäß ihrem Titel ein Verfahren und eine Vorrichtung zum Herstellen von laminierten Kunststoff-Formteilen beschreibt.

Der Erfindung liegt die Aufgabe zugrunde, das aus der EP 0 629 487 A1 bekannte Kaschierverfahren derart weiterzubilden, daß eine ausreichende Plastifizierung des thermoplastischen Werkstoffs an der Oberfläche des Trägers möglich ist, ohne daß eine schädliche Erwärmung des Trägerinneren eintritt.

Erfindungsgemäß wird die gestellte Aufgabe mit einem Verfahren zum Kaschieren eines einen thermoplastischen Werkstoff enthaltenden Trägers mit einer Deckschicht gelöst, bei dem der Träger einer Wärmebehandlung unterzogen wird, während derer dem Träger im Bereich seiner zu kaschierenden Oberfläche ausreichend Wärmeenergie zugeführt wird, daß der thermoplastische Werkstoff in diesem Bereich plastifiziert, die aber kurz genug ist, daß die Struktur des Trägers nur im Bereich seiner Oberfläche verändert wird, und die Temperatur des Trägers nach der Wärmebehandlung wieder mindestens auf einen Wert gesenkt wird, an dem der thermoplastische Werkstoff nicht mehr plastisch ist, wobei die Deckschicht vor, während oder nach der Wärmebehandlung mit der zu kaschierenden Oberfläche des Trägers in Kontakt gebracht wird, spätestens jedoch bevor die Temperatur des Trägers nach der Wärmebehandlung den Wert erreicht, an dem der thermoplastische Werkstoff nicht mehr plastisch ist, wobei der Träger zu Beginn der Wärmebehandlung eine Vorwärmtemperatur hat, die zwischen der Langzeit-Gebrauchstemperatur ohne mechanische Belastung und der Plastifizierungstemperatur des thermoplastischen Werkstoffs liegt.

Alternativ wird die obige Aufgabe erfindungsgemäß mit einem Verfahren zum Kaschieren eines einen thermoplastischen Werkstoff enthaltenden Trägers mit einer Deckschicht gelöst, bei dem der Träger einer Wärmebehandlung unterzogen wird, die Deckschicht auf die zu kaschierende Oberfläche des erwärmten Trägers gedrückt wird, wobei dem Träger während der Wärmebehandlung an seiner zu kaschierenden Oberfläche ausreichend Wärmeenergie zugeführt wird, daß der beim Kaschieren aufgebrachte Druck zu einer innigen Verbindung der thermoplastischen Werkstoffe führt, die Wärmebehandlung aber kurz genug ist, daß die Struktur des Trägers höchstens im Bereich seiner Oberfläche verändert wird, und die Temperatur des Trägers nach dem Kaschieren wieder auf einen Wert gesenkt wird, an dem der thermoplastische Werkstoff nicht mehr plastisch ist, wobei der Träger zu Beginn der Wärmebehandlung eine Vorwärmtemperatur hat, die zwischen der Langzeit-Gebrauchstemperatur ohne mechanische Belastung und der Plastifizierungstemperatur des thermoplastischen Werkstoffs liegt.

Bei den erfindungsgemäßen Lösungen der gestellten Aufgabe liegt folgende Überlegung zugrunde:

Zum einen soll die für die Plastifizierung des Trägers an der Oberfläche zuzuführende Energiemenge möglichst groß sein, damit die Plastifizierung in kurzer Zeit erfolgen kann (Schockerwärmung), weshalb der Träger vor der Schockerwärmung auf eine Vorwärmtemperatur gebracht wird. Zum anderen darf die Vorwärmtemperatur aber nicht zu hoch liegen, damit zum einen thermische Schädigungen des Trägers ausgeschlossen sind, und zum anderen der Träger noch genügend Formstabilität hat, um ihn überhaupt kaschieren zu können. Daher wird der Träger auf eine Vorwärmtemperatur gebracht, die etwa im Bereich der Langzeit-Gebrauchstemperatur ohne mechanische Belastung des thermoplastischen Werkstoffs liegt, jedenfalls aber unterhalb der Plastifizierungstemperatur des thermoplastischen Werkstoffs. Was unter der "Langzeit-Gebrauchstemperatur ohne mechanische Belastung" zu verstehen ist, ist aus der einschlägigen Literatur bekannt, insbesondere wird verwiesen auf Hans Domininghaus, "Kunststoffe und ihre Eigenschaften", Seite 47, wo beispielsweise die Langzeit-Gebrauchstemperatur ohne mechanische Belastung für PP mit etwa 100 °C angegeben wird.

Wie oben dargelegt, wird eine wegen der dabei auftretenden schädlichen Temperaturgradienten ungünstige Langzeiterwärmung erfindungsgemäß durch eine Schockerwärmung ersetzt, die wegen der Vorwärmtemperatur des Trägers besonders kurz sein kann.

Erfindungsgemäß bevorzugt liegt die Vorwärmtemperatur zwischen der Kurzzeit-Gebrauchstemperatur ohne mechanische Belastung und der Lanzeit-Gebrauchstemperatur ohne mechanische Belastung des thermoplastischen Werkstoffs. Auch bei der "Kurzzeit-Gebrauchstemperatur ohne mechanische Belastung" handelt es sich um einen aus der Fachliteratur bekannten Terminus, sie liegt für PP bei ca. 140-150 °C.

Das Aufheizen des Trägers auf die Vorwärmtemperatur kann in einem Ofen erfolgen. Im Hinblick auf minimalen Energieeinsatz ist es jedoch erfindungsgemäß bevorzugt, daß die Vorwärmtemperatur zumindest z.T. aus der Prozeßwärme bei der Herstellung des Trägers resultiert. Mit anderen Worten sollte sich der Kaschiervorgang unmittelbar an den Herstellungsprozeß des Trägers anschließen, weil dann die von der Herstellung des Trägers herrührende Wärme des Trägers noch genutzt werden kann.

Die Deckschicht kann ebenfalls vor dem Anbringen an den Träger vorgewärmt werden. Dies dient wiederum der besseren Steuerbarkeit des Kaschiervorgangs sowie der Qualität der erzeugten Verbindung zwischen dem Träger und der Deckschicht.

Insbesondere ist es bevorzugt, daß die der Deckschicht durch Erwärmung und Druckbeaufschlagung insgesamt zugeführte Energie ausreicht, einen darin enthaltenen thermoplastischen Werkstoff zu plastifizieren. Wie bereits oben ausgeführt, kann nämlich dann, wenn auch die Deckschicht einen thermoplastischen Werkstoff enthält, durch Plastifizierung sowohl auf Seiten des Trägers als auch auf Seiten der Deckschicht eine besonders innige Verbindung erzielt werden.

Zur Beschleunigung des Verfahrens kann es erfindungsgemäß vorgesehen sein, daß die Absenkung der Temperatur des Trägers nach der Wärmebehandlung durch einen Kühlschritt erzwungen wird. Ein solcher Kühlschritt ist aber nicht in jedem Fall erforderlich.

Neben dem vorstehend beschriebenen Verfahren schafft die Erfindung auch eine Vorrichtung zum Ausführen des Verfahrens, mit einem ersten und einem zweiten Gesenk zum Pressen des Trägers, von denen das zweite eine mindestens die zu kaschierende Oberfläche des Trägers abdeckende Preßfläche hat, einer Kaschiereinrichtung, einer Heizeinrichtung und einer Steuereinrichtung, die dazu ausgelegt ist, das zweite Gesenk nach dem Pressen des Trägers von dem ersten Gesenk abzuheben, wobei der Träger an dem ersten Gesenk verbleibt, und die Heizeinrichtung für die Vorwärmung und die Wärmebehandlung des Trägers anzusteuern.

Mit dieser Vorrichtung ist es möglich, das erfindungsgemäße Kaschierverfahren unmittelbar im Anschluß an die Herstellung des Trägers durchzuführen, und zwar insbesondere unter Ausnutzung der bei der Herstellung des Trägers anfallenden Prozeßwärme. Dazu kann nämlich unmittelbar nach Herstellung des Trägers das zweite Gesenk abgehoben werden und die damit freigelegte Kaschierfläche mit der gleichzeitig angesteuerten Heizeinrichtung wärmebehandelt werden, ohne daß der Träger von dem ersten Gesenk entfernt werden müßte. Dadurch kann das erfindungsgemäße Verfahren besonders schnell ausgeführt werden. Insbesondere kann sich unmittelbar an die Wärmebehandlung dann die Kaschierung anschließen, indem der wärmebehandelte und noch an dem ersten Gesenk liegende Träger von der Kaschiereinrichtung kaschiert wird.

Bei der Heizeinrichtung kann es sich um eine dreidimensionale Infrarotheizung und/oder um eine zweidimensionale Infrarotheizung, eine Heißluftheizung und/oder eine Thermokontaktheizung handeln.

Nach einer Ausführungsform der Erfindung ist die Heizeinrichtung von einer 3-dimensionalen Infrarot-Heizung gebildet, welche die gleiche Oberflächenkontur hat wie das zweite Gesenk, kontrolliert heizbar ist und nach dem Abheben des zweiten Gesenks gegen das erste gefahren werden kann.

Dadurch, daß die 3-dimensionale Infrarot-Heizung die gleiche Oberfläche wie das zweite Gesenk, d. h. eine mindestens die zu kaschierende Oberfläche des Trägers abdeckende Heizfläche hat, ist sichergestellt, daß die gesamte zu kaschierende Oberfläche der Wärmebehandlung unterzogen wird, so daß auch über diese gesamte zu kaschierende Oberfläche eine Plastifizierung eintritt.

Zum Zwecke des Vorwärmens des Trägers auf die oben näher beschriebene Vorwärmtemperatur kann es erfindungsgemäß vorgesehen sein, daß das erste und das zweite Gesenk heizbar sind und die Steuereinrichtung dazu ausgelegt ist, sie derart anzusteuern, daß der dazwischenliegende Träger auf die Vorwärmtemperatur gebracht wird.

Diese Gestaltung ist insbesondere dann sinnvoll, wenn die Prozeßwärme bei der Herstellung des Trägers nicht ausreichen sollte oder die Temperatur nach Herstellung des Trägers und bis zur Wärmebehandlung unter die gewünschte Vorwärmtemperatur gefallen sein könnte.

Als Werkstoffe für den Träger kommen thermoplastische Kunststoffe, wie PP, PE, andere Polyolefine, ABS und andere technische Kunststoffe einschließlich deren E-Modifikationen, biologisch abbaubare Kunststoffe, wie PHB, CA, TPS, PCL u. dgl. in Betracht. Der Träger muß zumindest anteilig aus einem thermoplastischen Werkstoff bestehen, während andere Komponenten auch Duroplaste sein können. Es kommen Homopolymere, Copolymere, Terpolymere und Blends/Alloys in Betracht. Ferner kann der Träger auch thermoplastisch gebundene Fasern und Füllstoffe beinhalten, die einen Anteil von bis zu 99% ausmachen können. Die Fasern und Füllstoffe können organisch und/oder anorganisch, synthetisch und/oder natürlich sein. In Frage kommen auch duroplastische Faserverbunde mit thermoplastischem Anteil, wie etwa EP, UP usw.

Als Deckschichten kommen Folien, Vliese, Teppiche, Textilien, Leder oder ähnliche Materialien sowie Verbunde der genannten Materialien mit Schäumen aus thermoplastischem Kunststoffen oder Schäumen mit thermoplastischem und/oder duroplastischem Kunststoffanteil in Betracht.

Nachstehend ist die Erfindung anhand bevorzugter Beispiele unter Bezugnahme auf die beiliegende Zeichnung mit weiteren Einzelheiten näher erläutert. Dabei zeigen
- Fig. 1: den Verlauf der Oberflächentemperatur eines Trägers während eines Kaschiervorgangs nach einem ersten Ausführungsbeispiel der Erfindung und
- Fig. 2 bis 7: schematisch den Kaschiervorgang nach anderen Ausführungsbeispielen der Erfindung.

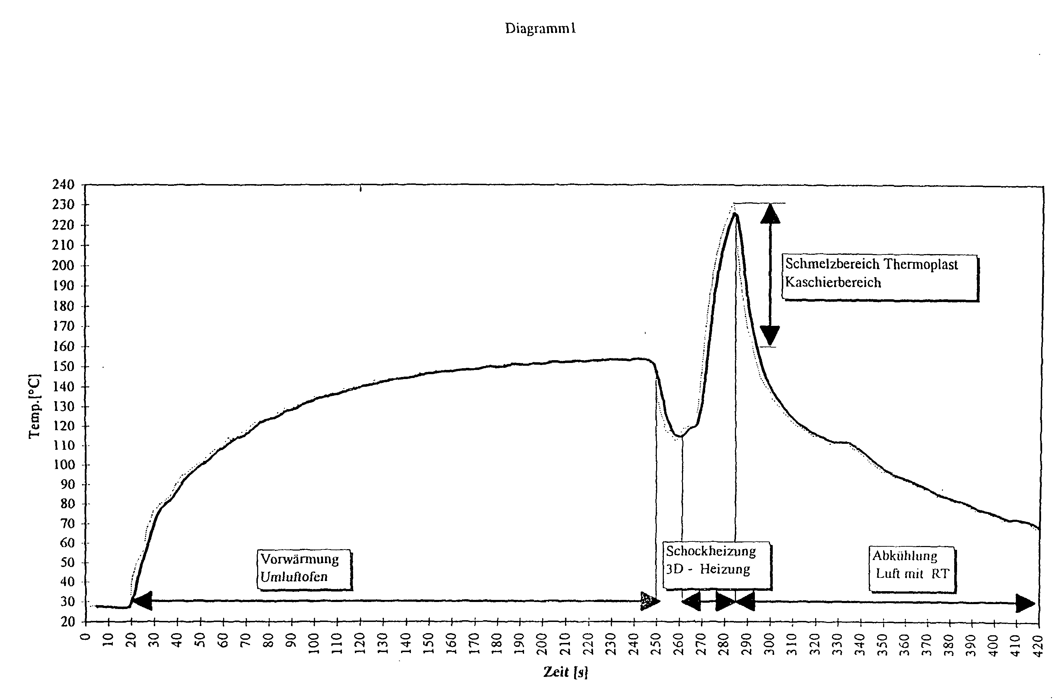

Fig. 1 zeigt den Temperaturverlauf an der Oberfläche eines Trägers während eines Kaschiervorgangs nach einem ersten Ausführungsbeispiel der Erfindung.

Der Träger wurde in einen Ofen gesetzt und nach 20 Sekunden in dem Ofen beheizt. Seine Temperatur stieg dabei auf ca. 150°C. Nach 240 Sekunden wurde der Träger aus dem Ofen genommen, woraufhin seine Temperatur innerhalb von knapp 20 Sekunden auf ca. 110°C fiel. Bei dem darauffolgenden Wärmebehandlungsschritt wurde der Träger an seiner Oberfläche innerhalb von 20 Sekunden auf mehr als 230°C erhitzt. Dabei trat an der Oberfläche eine Plastifizierung des in dem Träger enthaltenden thermoplastischen Werkstoffs ein, wohingegen das Trägerinnere wegen der kurzen Erwärmungszeit kaum merklich erwärmt wurde.

Im Anschluß an die Wärmebehandlung (nach ca. 280 Sekunden) wurde eine Deckschicht auf den Träger aufkaschiert und der so kaschierte Träger wurde abgekühlt.

Wie bereits oben erläutert, zeigt das beiliegende Diagramm den Temperaturverlauf für den Fall, daß die Vorwärmung in einem Ofen erfolgt.

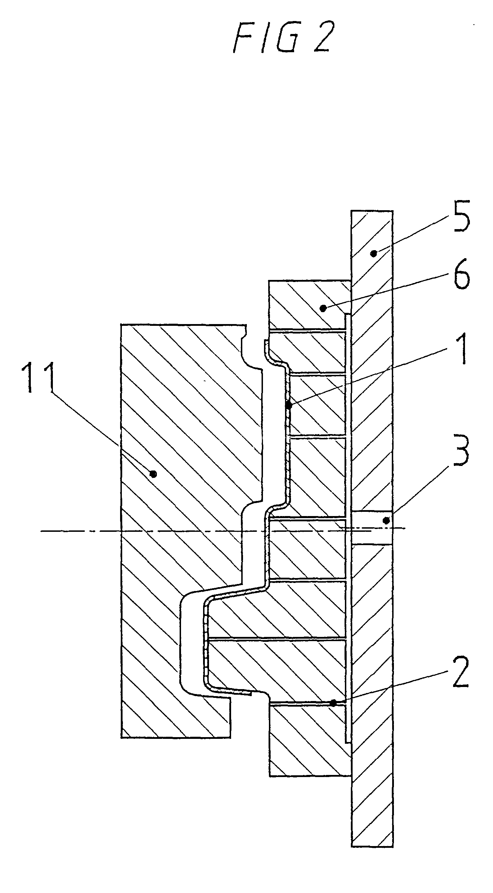

Allerdings kann auch die Prozeß-Restwärme bei der Herstellung des Trägers ausgenutzt werden, wie dies nachstehend unter Bezugnahme auf die Fig. 2 bis 7 erläutert ist.

Danach wird ein Träger 1 in bekannter Weise durch Pressen hergestellt, wobei er nach dem Pressen auf einem Untergesenk 6 liegt, das auf einer Werkzeuggrundplatte 5 angeordnete ist. Zum Pressen dient ein Obergesenk, das als Verpressungsgesenk 11 bezeichnet ist. Das Verpressungsgesenk 11 ist temperiert. Fig. 2 zeigt, wie das Verpressungsgesenk 11 nach dem Herstellen des Trägers 1 von dem Untergesenk 6 abhebt.

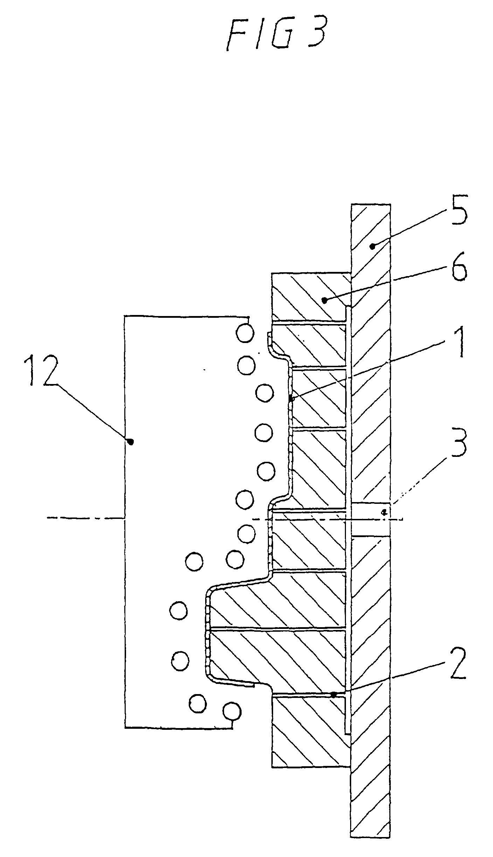

Gemäß Fig. 3 fährt sodann eine Heizeinrichtung über den auf dem Untergesenk 6 liegenden Träger 1. Bei dieser Heizeinrichtung handelt es sich um eine 3-dimensionale Infrarot-Heizung 12, die wesentlich heißer ist als das Verpressungsgesenk 11.

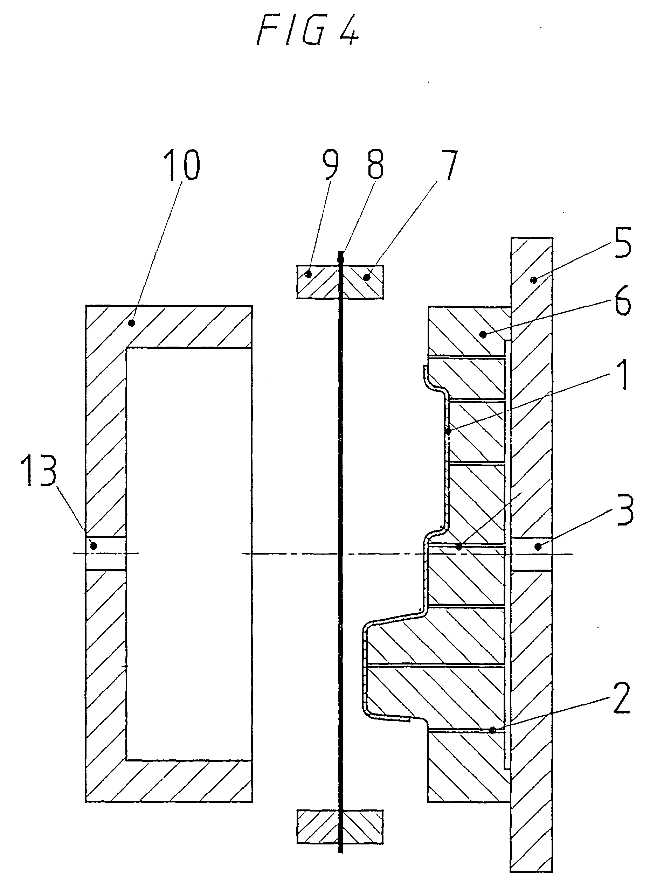

Gemäß Fig. 4 wird nach dem Abheben der Heizeinrichtung eine zwischen einem unteren Spannrahmen 7 und einem oberen Spannrahmen 9 aufgespannte Deckschicht 8 über das Untergesenk 6 mit darauf befindlichem Träger 1 gefahren. Ferner wird eine Druckglocke 10 über die Deckschicht 8 gefahren.

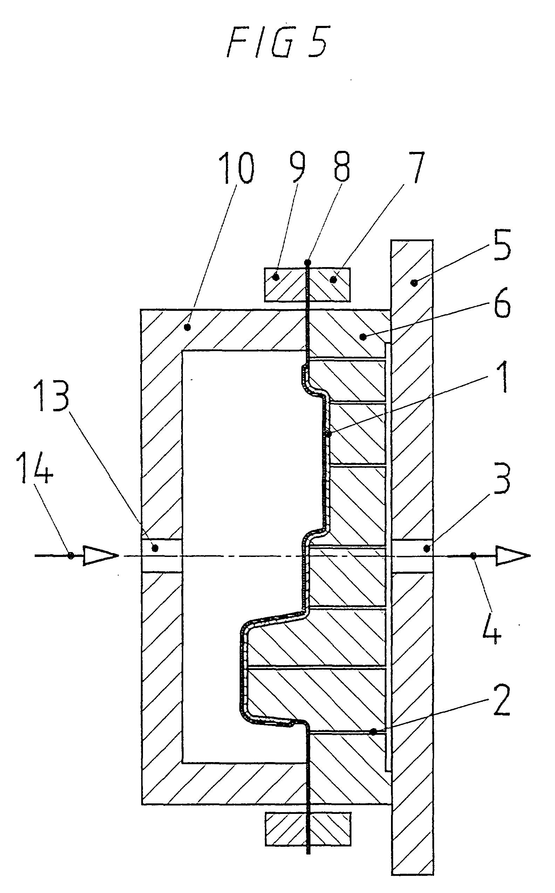

Wie in Fig. 5 gezeigt, werden die Deckschicht 8 mittels der Spannrahmen 7 und 9 und die Druckglocke 10 sodann gegen den auf dem Untergesenk 6 liegenden Träger 1 gefahren, der zu diesem Zeitpunkt wegen der kurzzeitigen Beheizung mit der 3-dimensionalen Infrarot-Heizung nach Fig. 3 noch an seiner Oberfläche plastifiziert ist. Sodann wird an einem Vakuumanschluß 3 ein Unterdruck 4 erzeugt, während an einem Druckluftanschluß 13 ein Überdruck 14 erzeugt wird. Über Unterdruckbohrungen 2 wird dadurch ein entsprechender Unterdruck auf den Träger 1 ausgeübt, wodurch er sich an das Untergesenk anschmiegt, wobei gleichzeitig der Überdruck 14 dafür sorgt, daß die Deckschicht 8 gegen den Träger 1 gepreßt wird.

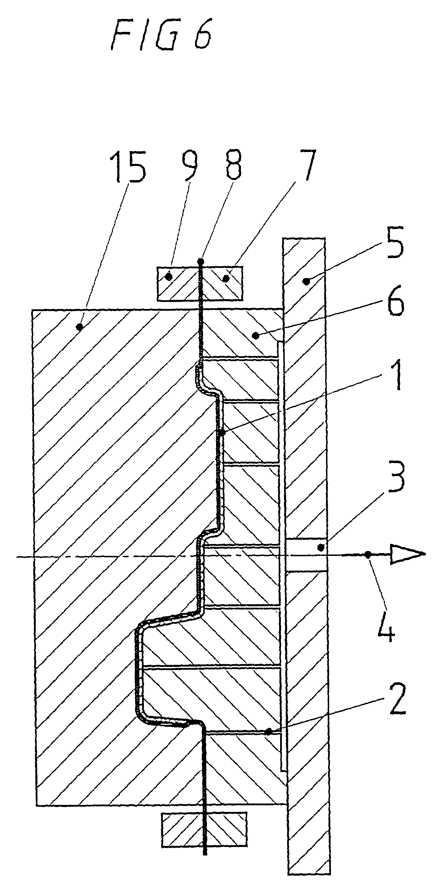

Nach dem in Fig. 5 dargestellten eigentlichen Kaschiervorgang findet dann noch gemäß Fig. 6 ein weiterer Vorgang statt, bei dem ein Kaschiergesenk 15 gegen den kaschierten Träger 1 mit der darauf befindlichen Deckschicht 8 gefahren wird. Das Kaschiergesenk hat eine Temperatur von 30°C und wirkt daher kühlend.

Demgegenüber hat die 3-dimensionale Infrarot-Heizung 12 eine wesentlich höhere Temperatur, nämlich eine Temperatur, die zu einer Plastifizierung der zu kaschierenden Oberfläche des Trägers 1 in sehr kurzer Zeit führt.

Bei dem vorstehend beschriebenen Ausführungsbeispiel des erfindungsgemäßen Verfahrens findet mithin die Vorwärmung auf einem Gesenk statt, und zwar auf dem Untergesenk, das schon vorher zur Herstellung des Trägers gedient hat. Daher kann der gesamte Kaschierungsvorgang wegen Wegfalls des Transports des Trägers in den Ofen hinein und aus dem Ofen heraus erheblich schneller vonstattengehen, als dies in Fig. 1 gezeigt ist. Die Gesamtkaschierzeit liegt in einem solchen Fall im zweistelligen Sekundenbereich.

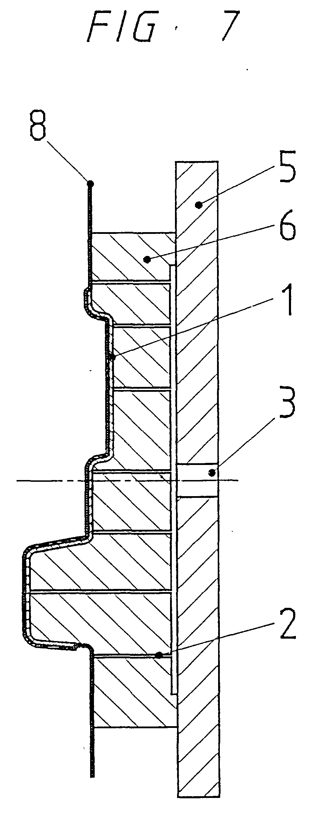

Alternativ zu dem vorstehend beschriebenen Verfahren nach einem Ausführungsbeispiel der Erfindung kann aber auch anstelle der 3-dimensionalen Infrarot-Heizung ein Heizgesenk und/oder eine dreidimensionale Infrarotheizung und/oder eine zweidimensionale Infrarotheizung und/oder eine Heißluftheizung verwendet werden. Da diese Heizungstypen bekannt sind, sind sie in dieser Anmeldung nicht mehr dargestellt. Auch kann die Beheizung mit der 3-dimensionalen Infrarot-Heizung 12 oder mit einer der genannten Infrarotheizungen und/oder der genannten Heißluftheizungen nach dem Anbringen der Deckschicht 8 auf dem Träger 1 erfolgen. Zur Illustration dieses Verfahrens sei auf Fig. 7 Bezug genommen. Bei diesem Verfahren wird nämlich erst die Deckschicht 8 auf dem Träger angebracht, woraufhin dann die Beheizung erfolgt. Mit anderen Worten wäre der vorstehend detailliert beschriebene Verfahrensablauf nur insoweit zu verändern, als der Beheizungsschritt nach Fig. 3 nach dem Kaschierschritt nach Fig. 5 erfolgt, woraufhin dann wieder gemäß Fig. 6 gekühlt wird.

Die in der vorstehenden Beschreibung, den Ansprüchen sowie der Zeichnung offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste:

- 1:: Trägerteil
- 2:: Vakuumbohrungen
- 3:: Vakuumabsaugung
- 4:: Vakuum
- 5:: Werkzeuggrundplatte
- 6:: Unterwerkzeug
- 7:: Spannrahmen unten
- 8:: Kunststoffolie (Deckschicht)
- 9:: Spannrahmen oben
- 10:: Druckglocke
- 11:: Verpressungsgesenk (beheizt; Heizung 1)
- 12:: 3-dimensionale Infrarot-Heizung
- 13:: Druckluftanschluß
- 14:: Druckluft
- 15:: Kaschierungsgesenk/Kühlungsgesenk

## Patentansprüche

1. Verfahren zum Kaschieren eines einen thermoplastischen Werkstoff enthaltenden Trägers mit einer Deckschicht, bei dem
- der Träger einer Wärmebehandlung unterzogen wird,
a) während derer dem Träger im Bereich seiner zu kaschierenden Oberfläche ausreichend Wärmeenergie zugeführt wird, daß der thermoplastische Werkstoff in diesem Bereich plastifiziert,
b) die aber kurz genug ist, daß die Struktur des Trägers nur im Bereich seiner Oberfläche verändert wird, und
- die Temperatur des Trägers nach der Wärmebehandlung wieder mindestens auf einen Wert gesenkt wird, an dem der thermoplastische Werkstoff nicht mehr plastisch ist,
wobei die Deckschicht vor, während oder nach der Wärmebehandlung mit der zu kaschierenden Oberfläche des Trägers in Kontakt gebracht wird, spätestens jedoch bevor die Temperatur des Trägers nach der Wärmebehandlung den Wert erreicht, an dem der thermoplastische Werkstoff nicht mehr plastisch ist,
**dadurch gekennzeichnet, daß**
der Träger zu Beginn der Wärmebehandlung eine Vorwärmtemperatur hat, die zwischen der Langzeit-Gebrauchstemperatur ohne mechanische Belastung und der Plastifizierungstemperatur des thermoplastischen Werkstoffs liegt.

2. Verfahren zum Kaschieren eines einen thermoplastischen Werkstoff enthaltenden Trägers mit einer Deckschicht, bei dem
- der Träger einer Wärmebehandlung unterzogen wird,
- die Deckschicht auf die zu kaschierende Oberfläche des erwärmten Trägers gedrückt wird, wobei
a) dem Träger während der Wärmebehandlung an seiner zu kaschierenden Oberfläche ausreichend Wärmeenergie zugeführt wird, daß der beim Kaschieren aufgebrachte Druck zu einer innigen Verbindung des thermoplastischen Werkstoffs führt,
b) die Wärmebehandlung aber kurz genug ist, daß die Struktur des Trägers höchstens im Bereich seiner Oberfläche verändert wird, und
- die Temperatur des Trägers nach dem Kaschieren wieder auf einen Wert gesenkt wird, an dem der thermoplastische Werkstoff nicht mehr plastisch ist,
**dadurch gekennzeichnet, daß**
der Träger zu Beginn der Wärmebehandlung eine Vorwärmtemperatur hat, die zwischen der Langzeit-Gebrauchstemperatur ohne mechanische Belastung und der Plastifiziertemperatur des thermoplastischen Werkstoffs liegt.

3. Verfahren nach Anspruch 1 oder 2, **dadurch gekennzeichnet, daß** die Vorwärmtemperatur zwischen der Kurzzeit-Gebrauchstemperatur ohne mechanische Belastung und der Langzeit-Gebrauchstemperatur ohne mechanische Belastung des thermoplastischen Werkstoffs liegt.

4. Verfahren nach Anspruch 3, **dadurch gekennzeichnet, daß** die Vorwärmtemperatur zumindest zum Teil aus der Prozeßwärme bei der Herstellung des Trägers resultiert.

5. Verfahren nach einem der vorangehenden Ansprüche, **dadurch gekennzeichnet, daß** die Deckschicht vor dem Anbringen an dem Träger vorgewärmt wird.

6. Verfahren nach einem der vorangehenden Ansprüche, **dadurch gekennzeichnet, daß** die der Deckschicht durch Erwärmung zugeführte Energie ausreicht, einen darin enthaltenen, thermoplastischen Werkstoff zu plastifizieren.

7. Verfahren nach einem der vorangehenden Ansprüche, **dadurch gekennzeichnet, daß** die Absenkung der Temperatur des Trägers nach dem Kaschieren durch einen Kühlschritt erzwungen wird.

8. Vorrichtung zum Ausführen des Verfahrens nach einem der vorangehenden Ansprüche, mit
einem ersten und einem zweiten Gesenk zum Pressen des Trägers, von denen das zweite eine mindestens die zu kaschierende Oberfläche des Trägers abdeckende Preßfläche hat,
einer Kaschiereinrichtung,
einer Heizeinrichtung und
einer Steuereinrichtung, die dazu ausgelegt ist, das zweite Gesenk nach dem Pressen des Trägers von dem ersten Gesenk abzuheben, wobei der Träger an dem ersten Gesenk verbleibt, und die Heizeinrichtung für die Wärmebehandlung des Trägers anzusteuern,
**dadurch gekennzeichnet, daß**
die Steuereinrichtung dazu ausgelegt ist, die Heizeinrichtung für die Vorwärmung des Trägers anzusteuern.

9. Vorrichtung nach Anspruch 8, **dadurch gekennzeichnet, daß** die Heizeinrichtung von einer 3-dimensionalen Infrarot-Heizung gebildet ist, die die gleiche Oberflächenkontur hat wie das zweite Gesenk, kontrolliert heizbar ist und welche nach dem Abheben des zweiten Gesenks gegen das erste Gesenk gefahren werden kann.

10. Vorrichtung nach Anspruch 8 oder 9, **dadurch gekennzeichnet, daß** das erste und das zweite Gesenk heizbar sind und die Steuereinrichtung dazu ausgelegt ist, sie derart anzusteuern, daß der dazwischenliegende Träger auf die Vorwärmtemperatur gebracht wird.

## Claims

1. A method of laminating a support containing a thermoplastic material to a facing, wherein
- the support is subjected to a heat treatment step,
a) during which sufficient thermal energy is supplied to the support in the region of its surface to be laminated so that the thermoplastic material is plasticised in this region,
b) but which is short enough for the structure of the support to be changed in the region of its surface only, and
- after the heat treatment step the temperature of the support is reduced again at least to a value at which the thermoplastic material is no longer plastic,
wherein the facing is brought into contact with the surface of the support which is to be laminated, before, during or after heat treatment but at the latest before the temperature of the support after heat treatment has reached a value at which the thermoplastic material is no longer plastic,
**characterised in that**
at the commencement of the heat treatment step the support is at a preheating temperature which is between the long-term temperature of use without mechanical stress and the plasticising temperature of the thermoplastic material.

2. A method of laminating a support containing a thermoplastic material to a facing, wherein
- the support is subjected to a heat treatment step,
- the facing is pressed on to the surface of the heated support, wherein
a) sufficient thermal energy is supplied to the support in the region of its surface to be laminated during the heat treatment step so that the pressure applied during laminating results in the intimate bonding of the thermoplastic material,
b) but the heat treatment step is short enough for the structure of the support to be changed in the region of its surface at most, and
- after laminating the temperature of the support is reduced again at least to a value at which the thermoplastic material is no longer plastic,
**characterised in that**
at the commencement of the heat treatment step the support is at a preheating temperature which is between the long-term temperature of use without mechanical stress and the plasticising temperature of the thermoplastic material.

3. A method according to claims 1 or 2, **characterised in that** the preheating temperature is between the short-term temperature of use without mechanical stress and the long-term temperature of use without mechanical stress of the thermoplastic material.

4. A method according to claim 3, **characterised in that** the preheating temperature results at least in part from the process heat during the production of the support.

5. A method according to any one of the preceding claims, **characterised in that** the facing is preheated before it is applied to the support.

6. A method according to any one of the preceding claims, **characterised in that** the energy which is supplied to the facing by heating is sufficient to plasticise a thermoplastic material contained therein.

7. A method according to any one of the preceding claims, **characterised in that** the reduction in temperature of the support after lamination is forced by a cooling step.

8. An apparatus for carrying out the method according to any one of the preceding claims, comprising
a first and a second die for pressing the support, the second of which has a pressing face which at least covers the surface of the support which is to be laminated,
a laminating device,
a heater device, and
a controller which is designed for raising the second die from the first die after pressing the support, wherein the support remains on the first die, and for operating the heater device for the heat treatment of the support,
**characterised in that**
the controller is designed for operating the heater device for preheating the support.

9. An apparatus according to claim 8, **characterised in that** the heater device is formed a by a 3-dimensional infrared heater which has the same surface contour as the second die, which can be heated in a controlled manner, and which can be moved towards the first die after the second die has been raised.

10. An apparatus according to claims 8 or 9, **characterised in that** the first and second dies can be heated, and the controller is designed for operating them so that the support disposed therebetween is brought to the preheating temperature.

## Revendications

1. Procédé de laminage d'un support contenant un matériau thermoplastique avec une couche de recouvrement où
- le support est soumis à un traitement thermique,
a) pendant lequel est amené au support au voisinage de sa surface à laminer suffisamment d'énergie thermique pour que le matériau thermoplastique se plastifie dans cette zone,
b) qui est cependant suffisamment court pour que la structure du support soit modifiée seulement au voisinage de sa surface et
- la température du support, après le traitement thermique, est abaissée au moins à une valeur à laquelle le matériau thermoplastique n'est plus plastique,
où la couche de recouvrement est amenée en contact avant, pendant ou après le traitement thermique avec la surface à laminer du support, au plus tard cependant avant que la température du support, après le traitement thermique, atteigne la valeur à laquelle le matériau thermoplastique n'est plus plastique, **caractérisé,**
**en ce que** le support, au début du traitement thermique, se trouve à une température de préchauffage qui se situe entre la température d'utilisation sur une longue durée sans sollicitation mécanique et la température de plastification du matériau thermoplastique.

2. Procédé de laminage d'un support contenant un matériau thermoplastique avec une couche de recouvrement, où
- le support est soumis à un traitement thermique,
- la couche de recouvrement est appliquée par pression sur la surface à laminer du support chauffé, où
a) il est amené au support pendant le traitement thermique, à sa surface à laminer, suffisamment d'énergie thermique pour que la pression exercée lors du laminage entraîne une liaison intime du matériau thermoplastique,
b) le traitement thermique est cependant suffisamment court pour que la structure du support soit modifiée tout au plus au voisinage de sa surface et
- la température du support, après le laminage, est de nouveau abaissée à une valeur à laquelle le matériau thermoplastique n'est plus plastique,
**caractérisé**
**en ce que** le support, au début du traitement thermique, se trouve à une température de préchauffage qui se situe entre la température d'utilisation sur une longue durée sans sollicitation mécanique et la température de plastification du matériau thermoplastique.

3. Procédé selon la revendication 1 ou 2, **caractérisé en ce que** la température de préchauffage se situe entre la température d'utilisation sur une courte durée sans sollicitation mécanique et la température d'utilisation sur une longue durée sans sollicitation mécanique du matériau thermoplastique.

4. Procédé selon la revendication 3, **caractérisé en ce que** la température de préchauffage résuete au moins partiellement de la chaleur de processus lors de la fabrication du support.

5. Procédé selon l'une des revendications précédentes, **caractérisé en ce que** la couche de recouvrement est préchauffée avant l'application au support.

6. Procédé selon l'une des revendications précédentes, **caractérisé en ce que** l'énergie amenée à la couche de recouvrement par échauffement suffit pour plastifier un matériau thermoplastique contenu dans celle-ci.

7. Procédé selon l'une des revendications précédentes, **caractérisé en ce que** l'abaissement de la température du support après le laminage est obtenu de force par une étape de refroidissement.

8. Dispositif pour la mise en oeuvre du procédé selon l'une des revendications précédentes, avec
une première et une seconde matrice pour le pressage du support, dont la seconde présente une face de pressage couvrant au moins la surface à laminer du support,
une installation de laminage,
une installation de chauffage et
une installation de commande qui est conçue pour relever la seconde matrice après le pressage du support de la première matrice, où le support reste à la première matrice, et pour commander l'installation de chauffage pour le traitement thermique du support,
**caractérisé**
**en ce que** l'installation de commande est conçue pour commander l'installation de chauffage pour le préchauffage du support.

9. Dispositif selon la revendication 8, **caractérisé en ce que** l'installation de chauffage est constituée par un chauffage tridimensionnel aux rayons infrarouges qui a le même contour de surface que la seconde matrice, qui peut être chauffé d'une manière contrôlée et qui, après le relevage de la seconde matrice, peut être amené contre la première matrice.

10. Dispositif selon la revendication 8 ou 9, **caractérisé en ce que** la première et la seconde matrice peuvent être chauffées et que l'installation de commande est conçue pour les commander de façons que le support situé entre soit amené à la température de préchauffage.
